# EUROPÄISCHE PATENTSCHRIFT

(11) **EP 0 441 158 B1**
(45) Veröffentlichungstag und Bekanntmachung des Hinweises auf die Patenterteilung: **05.01.1994**
(21) Anmeldenummer: 91100699.7
(22) Anmeldetag: 21.01.1991
(51) Int. Cl.: B60D 1/02

(54) **Einrichtung zur Spielausschaltung an Anhängerkupplungen Stichwort: Ansteuerung einer Spielausschaltvorrichtung durch eine Versorgungsleitung**
Device for taking up play in trailer hitches. Key word : control of a device for taking up play by a feed line
Installation pour l'élimination du jeu dans des attelages de remorquage. Mot clé : commande de l'installation d'élimination du jeu par conduite d'alimentation

(30) Priorität: 06.02.1990 DE 4003546
(43) Veröffentlichungstag der Anmeldung: 14.08.1991
(73) Patentinhaber: ROCKINGER Spezialfabrik für Anhängerkupplungen GmbH & Co., D-80904 München (DE)
(72) Erfinder: Glässner, Ralf, W-8060 Dachau (DE)
(74) Vertreter: Weickmann, Heinrich, Dipl.-Ing.

(56) Entgegenhaltungen:
- EP-A- 0 334 021
- DE-A- 2 458 948
- DE-A- 2 502 944
- DE-A- 3 917 918
- DE-C- 2 529 303

## Beschreibung

Die Erfindung betrifft eine Einrichtung zur Spielausschaltung an einer Anhängerkupplung zwischen einem Zugfahrzeug und einem Nachlauffahrzeug, mit einem zwei gekuppelte Kupplungselemente gegeneinander verspannenden Verspannungsgerät, welches beim Vorgang des Ankuppelns und beim Vorgang des Abkuppelns unwirksam ist.

Eine solche Einrichtung ist beispielsweise aus der DE-C-25 29 303 bekannt. Die bekannte Einrichtung ist beschrieben im Zusammenhang mit einer an einem Zugfahrzeug angebrachten Bolzenkupplung, deren Kupplungsbolzen zum Einkuppeln in eine Zugöse der Deichsel eines Nachlauffahrzeugs bestimmt ist. Zwischen dem Kupplungsbolzen und der Zugöse besteht beim Ein- und Auskuppeln notwendigerweise ein Spiel. Dieses Kupplungsspiel kann im Fahrbetrieb unerwünscht sein. Um dieses Kupplungsspiel im Fahrbetrieb zu unterdrücken, ist ein Verspannungsgerät vorgesehen, welches die Zugöse belastet, so daß sie sich gegen den Kupplungsbolzen anlegt und damit das Spiel unterdrückt ist.

Das Verspannungsgerät ist bei der bekannten Einrichtung von einem Anlageprisma gebildet, welches sich gegen die Zugöse anlegen und diese somit gegen den sie durchdringenden Kupplungsbolzen andrükken kann. Das Anlageprisma ist mit einer Betätigungseinrichtung verbunden, um das Anlageprisma gegen die Zugöse anzudrücken. Die Betätigungseinrichtung wird durch ein pneumatisches Steuerungssystem gesteuert. Der Aufwerfhebel der Anhängerkupplung, welcher zum Zurückziehen des Kupplungsbolzens aus der Zugöse beim Abkuppeln dient, wirkt auf ein Steuerventil des pneumatischen Steuerungssystems, so daß die Aktivierung und Inaktivierung des Verspannungsgeräts, im Beispielsfalle also des Prismas, durch Betätigung des Aufwerfhebels bewirkt wird.

Die Ansteuerung des pneumatischen Betätigungssystems durch den Aufwerfhebel ist nicht in allen Fällen anwendbar, da das Verspannungsgerät inaktiviert werden muß, bevor beim Abkuppeln der Kupplungsbolzen zurückgezogen wird und andererseits erst dann aktiviert werden darf, wenn beim Ankuppeln der Kupplungsbolzen bereits in die Kupplungsstellung getreten ist und die Zugöse durchsetzt.

Es gibt Kupplungsbauarten, bei denen der Aufwerfhebel unmittelbar bei Beginn seiner von Hand eingeleiteten Auskupplungsbewegung eine Entkupplungsbewegung des Kupplungsbolzens einleitet, so daß die Bewegung des Aufwerfhebels nicht dazu ausgenutzt werden kann, um das Verspannungsgerät zu inaktivieren, bevor die Rückzugsbewegung des Kupplungsbolzens aus der Zugöse beginnt. Dies bedeutet dann, daß der Kupplungsbolzen gegen die Reibungswirkung von Hand zurückgezogen werden muß, die von dem Verspannungsgerät auf die Eingriffsstelle zwischen Zugöse und Kupplungsbolzen ausgeübt wird. Das Zurückziehen des Kupplungsbolzens mittels des Aufwerfhebels ist damit unmöglich gemacht oder erschwert. Ebenso ist nicht immer gewährleistet, daß beim Einkuppeln nach dem Eintritt des Kupplungsbolzens in seine die Zugöse durchsetzende Kupplungsstellung noch ein Nachlaufweg des Aufwerfhebels zur Verfügung steht, um das Verspannungsgerät zu aktivieren. Dies würde dazu führen, daß die Aktivierung des Verspannungsgerätes bereits einsetzt, bevor der Kupplungsbolzen endgültig seine die Zugöse durchsetzende Kupplungsstellung erreicht hat. Dies könnte weiter dazu führen, daß infolge der einsetzenden Verspannung zwischen Kupplungsbolzen und Zugöse der Kupplungsbolzen seine endgültige Kupplungsstellung nicht erreicht und damit der Einkupplungszustand nicht gesichert wird.

Um diese Nachteile der bekannten Einrichtung zu beseitigen, könnte man zwar Verzögerungsmaßnahmen an der Kupplungsmechanik oder in der Schaltung treffen, welche bewirken, daß beim Einkuppeln das Verspannungsgerät erst aktiviert wird, nachdem der Kupplungsbolzen seine endgültige Kupplungsstellung erreicht hat und daß beim Auskuppeln das Verspannungsgerät inaktiviert wird, bevor die Auskupplungs- oder Rückzugsbewegung des Kupplungsbolzens beginnt. Solche Maßnahmen führen aber zu einem erhöhten Bauaufwand und damit zu einer Verteuerung.

Der Erfindung liegt die Aufgabe zugrunde, mit vereinfachten Mitteln dafür zu sorgen, daß das Verspannungsgerät beim Vorgang des Ankuppelns und beim Vorgang des Abkuppelns zwangsläufig inaktiviert ist.

Zur Lösung dieser Aufgabe wird erfindungsgemäß vorgeschlagen, daß das Verspannungsgerät in Abhängigkeit von der Ankopplung mindestens einer Zusatzverbindung zwischen Zugfahrzeug und Nachlauffahrzeug aktivierbar und in Abhängigkeit von der Abkopplung der Zusatzverbindung inaktivierbar ist.

Wenn hier von einer Zusatzverbindung zwischen Zugfahrzeug und Nachlauffahrzeug gesprochen wird, so ist insbesondere an elektrische und/oder hydraulische und/oder pneumatische Anhängerversorgungsleitungen gedacht, die sich beim Anhängerfahrbetrieb vom Zugfahrzeug zum Anhänger erstrecken und die, wenn der Anhänger oder das Nachlauffahrzeug angekuppelt wird, am Zugfahrzeug und am Nachlauffahrzeug oder an beiden angekuppelt werden müssen.

Wenn hier von Versorgungsleitungen gesprochen wird, so ist dieser Begriff umfassend zu verstehen. Er umfaßt nicht nur hydraulische bzw. pneumatische bzw. elektrische Versorgungsleitungen sondern auch etwaige von den Versorgungsleitungen getrennte Steuerleitungen. Denkbar ist auch, daß zwischen dem Zugfahrzeug und dem Nachlauffahrzeug eine die Verbindung der beiden Fahrzeuge sichernde flexible Leine existiert, die ebenfalls beim Ankuppeln des Nachlauffahrzeugs an dem Zugfahrzeug entweder am Zugfahrzeug oder am Nachlauffahrzeug oder an beiden angekoppelt werden muß und deren Ankopplung bzw. Abkopplung ebenfalls dazu verwendet werden kann, um ein Signal zur Aktivierung bzw. Inaktivierung des Verspannungsgeräts zu liefern.

Die Erfindung beruht auf der Beobachtung, daß beim Ankuppeln eines Nachlauffahrzeug an ein Zugfahrzeug zuerst die primäre zugübertragende Kupplung gekuppelt, daß heißt in den zug- und schubübertragenden Zustand gebracht wird und dann erst etwaige Zusatzverbindungen gekoppelt werden und daß andererseits beim Abkuppeln eines Nachlauffahrzeugs von einem Zugfahrzeug zuerst etwaige Zusatzverbindungen abgekoppelt werden und dann erst die primäre, Zugkraft und Schubkraft übertragende Kupplung abgekuppelt wird. Unter Berücksichtigung dieser verbreiteten Übung erreicht man also durch die erfindungsgemäße Lösung, daß beim Herstellen der zug- und druckkraftübertragenden Primärkupplung zwischen Zugfahrzeug und Nachlauffahrzeug das Verspannungsgerät noch nicht aktiviert ist, da dieses ja erst durch die später stattfindende Kopplung in der Zusatzverbindung aktivert wird und daß andererseits beim Lösen der primären Zugkraft und Druckkraft übertragen-den Kupplung zwischen Zugfahrzeug und Nachlauffahrzeug das Verspannungsgerät nicht mehr aktiviert ist, da dieses durch die vorherige Abkopplung der Zusatzverbindung bereits inaktiviert worden ist.

Es ist möglich, zur Aktivierung bzw. Inaktivierung des Verspannungsgeräts einen Aktivierungssensor zu benutzen, der in einer Kopplungseinrichtung der jeweiligen Zusatzverbindung integriert ist. Beispielsweise kann man in einer Kopplungseinrichtung, welche den Anschluß einer ständig am Anhänger vorhandenen flexiblen Verbindungsleitung an einer Anschlußdose am Zugfahrzeug herzustellen gestattet, einen Endschalter oder einen Näherungsschalter für ein elektrisches Aktivierungssystem des Verspannungsgeräts vorsehen oder ein mechanisch auslösbares Ansteuerventil für ein hydraulisches oder pneumatisches Aktivierungssystem.

Alternativ kann man ein Aktivierungs- bzw. Inaktivierungssignal auch von einer Zustandsveränderung in einem mit der jeweiligen Zusatzverbindung zusammenhängenden System ableiten, welche Zustandsveränderung als Folge des Ankoppelns bzw. Abkoppelns der jeweiligen Zusatzverbindung zwangsläufig eintritt. Dies hat den Vorteil, daß man in diesem Fall an der Kopplungseinrichtung welche die Zusatzverbindung mit dem Zugfahrzeug bzw. dem Nachlauffahrzeug herzustellen gestattet, gar keine Änderungen vornehmen muß, sondern einfach eine schon bisher auftretende Zustandsveränderung ermittelt und diese zur Aktivierung bzw. Inaktivierung des Verspannungsgeräts nutzbar macht.

Wenn ein Zugfahrzeug mit einem Nachlauffahrzeug zur gemeinsamen Fahrt verbunden wird, so ist es üblich, an dem Nachlauffahrzeug eine Bremse vorzusehen, die bremsend wirksam wird, wenn auch die Bremsen des Zugfahrzeugs wirksam werden. Dies bedeutet, daß zwischen Zugfahrzeug und Nachlauffahrzeug häufig mindestens eine Bremsleitung vorgesehen ist, welche eine Bremsung des Nachlauffahrzeugs in Abhängigkeit von der Bremsung des Zugfahrzeugs gestattet. Dabei ist es in vielen Fällen aus Bremsbetriebsgründen notwendig, daß durch das An- und Abkoppeln der Bremsleitung, die in aller Regel am Nachlauffahrzeug ständig angebracht und am Zugfahrzeug an- bzw. abgekoppelt wird, eine Zustandsveränderung in dem Bremssystem des Zugfahrzeugs eintritt. Diese Zustandsveränderung kann man nutzbar machen, um das Verspannungsgerät zu aktivieren bzw. zu inaktivieren.

Ein häufiger Fall ist folgender: Das Nachlauffahrzeug ist mit einer pneumatischen Zweileitungs-Bremsanlage ausgeführt. Dann muß zwischen dem Zugfahrzeug und dem Nachlauffahrzeug zum einen eine sogenannte Vorratsleitung und zum anderen eine sogenannte Steuerleitung hergestellt werden. Grob gesagt dient die Vorratsleitung dazu, um die notwendige Bremsenergie beispielsweise von einem Kompressor oder einem Drucklufttank auf das Nachlauffahrzeug zu übertragen, während die Steuerleitung dazu dient, entsprechend der am Zugfahrzeug eingeleiteten Bremswirkung auch eine Bremswirkung am Nachlauffahrzeug auszulösen. Bei einer solchen Zweileitungs-Bremsanlage ist am Zugfahrzeug ein auf die Ankopplung bzw. Abkopplung der Vorratsleitung reagierendes Vorratsleitungsabsperrventil vorgesehen. Dieses Vorratsleitungsabsperrventil dient dazu, ein Entweichen von Bremsluft aus dem Bremsleitungssystem des Zugfahrzeugs dann zu verhindern, wenn die Vorratsleitung des Nachlauffahrzeugs nicht angekoppelt ist. Andererseits ist auch in der Steuerleitung an der zugfahrzeugseitigen Kopplungsstelle ein Steuerleitungsabsperrventil vorgesehen, welches ebenfalls auf die Ankopplung bzw. Abkopplung der Vorratsleitung reagiert und die Steuerleitung absperrt, wenn die Vorratsleitung vom Zugfahrzeug abgekoppelt ist. Durch dieses Steuerleitungsabsperrventil wird verhindert, daß beim Bremsen des nicht mit einem Nachlauffahrzeug verbundenen Zugfahrzeugs Druckluft durch die zugfahrzeugseitige Ankopplungsstelle der Steuerleitung ständig entweichen kann.

Das Steuerleitungsabsperrventil ist dabei über eine Quersteuerleitung von dem Vorratsleitungsabsperrventil her gesteuert so, daß das Steuerleitungsabsperrventil offen ist, wenn die mit Nachlauffahrzeug verbundene Vorratsleitung an die zugehörige zugfahrzeugsseitige Ankopplungsstelle angekoppelt ist. In der Quersteuerleitung besteht also dann Druck, wenn die Vorratsleitung an das Zugfahrzeug angekoppelt ist und kein Druck, wenn die Vorratsleitung von dem Zugfahrzeug abgekoppelt ist. Der Zustandswechsel tritt zwangsläufig in Abhängigkeit von dem Ankoppeln bzw. Abkoppeln der Vorratsleitung an die zugfahrzeugseitige Ankopplungsstelle ein. Das Verspannungsgerät ist ebenso wie die Quersteuerleitung regelmäßig am Zugfahrzeug angebracht. Es bedarf also nur eines geringen Schaltungsaufwands, um das Verspannungsgerät in Abhängigkeit von dem Druckwechsel in der Quersteuerleitung zu aktivieren bzw. zu inaktivieren.

Das Aktivierungs- bzw. Inaktivierungssignal kann in Form von aus der Quersteuerleitung abgezweigter Druckluft zur Betätigung oder Steuerung des Verspannungsgeräts herangezogen werden.

Zu Vermeidung von Risiken bei Leitungsbruch oder Leckage in dem zusätzlich angeschlossenem System, empfiehlt es sich die Druckluft zur Betätigung bzw. Steuerung des Verspannungsgeräts von der Quersteuerleitung über ein Überströmventil mit Rückströmung abzuzapfen.

Überströmventil mit Rückströmung ist ein Ventil, welches nur dann Druckluft an das Verspannungsgerät bzw. dessen Steuerung gelangen läßt, wenn vor dem Überströmventil an der Quersteuerleitung ein vorbestimmter Mindestdruck vorhanden ist und welches eine Verbindung von dem Verspannungsgerät bzw. von dessen Steuerung zurück zu der Quersteuerleitung öffnet, wenn der Druck auf der Seite des Verspannungsgeräts bzw. dessen Steuerung größer ist als der Druck auf der Seite der Quersteuerleitung. Ein solches Überströmventil mit Rückströmung sorgt dafür, daß an der Eingangsseite des Überströmventils, d.h. also an der Quersteuerleitung auch bei Defekt an der Ausgangsseite des Überströmventils immer noch der am Überströmventil eingestellte Überdruck erhalten bleibt, so daß die Funktion der Bremsanlage gewährleistet bleibt. Die Rückströmmöglichkeit sorgt andererseits dafür, daß bei Abfall des Drucks an der Eingangsseite des Überströmventils, d.h. also an der Quersteuerleitung, auch der Druck an der Ausgangsseite des Überströmventils in gleichem Maße abgebaut wird und damit das Verspannungsgerät drucklos wird, d.h. das Steuerungssystem des Verspannungsgeräts letzteres auf Inaktivierung schalten kann.

Wenn es unerwünscht ist, an die Quersteuerleitung ein ausgedehntes Zusatzsystem anzuschließen oder wenn ein invertiertes Steuersignal benötigt wird, so ist es auch denkbar, das Aktiverungs- bzw. Inaktivierungssignal mittels eines Drucksensors von der Quersteuerleitung abzunehmen und mittels dieses Drucksensors ein Versorgungssystem für das Verspannungsgerät zu steuern. Als Drucksensor kommt dabei insbesondere ein vom Druck in der Quersteuerleitung steuerseitig beaufschlagtes Umschaltventil in Frage, welches Teil eines Versorgungs- oder Steuerungssystems des Verspannungsgeräts ist oder aber ein pneumatisch betätigter elektrischer Schalter als Teil eines elektrischen Steuerungssystems des Verspannungsgeräts.

Was nun das Verspannungsgerät selbst anbelangt, so kann dies auf verschiedene Weise aufgebaut sein. So ist es beispielsweise möglich, das Verspannungsgerät mit einem Druckluftzylinder oder einem Hydraulikzylinder auszuführen, welcher bei Druckbeaufschlagung eine Verspannung der miteinander zu kuppelnden Kupplungselemente bewirkt. Daneben ist auch eine Lösung denkbar, wie sie in der deutschen Patentschrift DE-C-25 29 303 vorgesehen ist; das Grundprinzip dieser bekannten und auch erfindungsgemäß anwendbaren Lösung ist wie folgt:

Das Verspannungsgerät steht unter der Wirkung einer Federkraft. Diese Federkraft sucht das Verspannungsgerät zu aktivieren, so daß die gekuppelten Kupplungselemente spielfrei aneinander anliegen. Die Federkraft ist aber nicht ausreichend, um die Kupplungselemente unter allen Umständen relativ zueinander zu bewegen und in die spielfreie Anlagestellung zu bringen. Andererseits reicht die Federkraft aus, um das Verspannungsgerät dann in Verspannungsstellung zu bringen, wenn die miteinander gekuppelten Kupplungselemente etwa durch Zug des Zugfahrzeugs in spielfreie Stellung gebracht worden sind. Parallel zu der Federkraft ist ein hydraulisches Feststellelement geschaltet. Dieses saugt Hydraulikflüssigkeit an, wenn das Verspannungsgerät durch Federkraft in Verspannungsstellung gegenüber den spielfrei aneinander anliegenden Kupplungselementen gebracht wird. Die Ansaugung der Hydraulikflüssigkeit in das hydraulische Feststellelement erfolgt über ein Rückschlagventil, so daß die angesaugte Flüssigkeit nicht in den ihr zugehörigen Tank zurückfliesen kann, wenn das hydraulsische Feststellgerät von dem Vespannungsgerät her belastet wird. Damit ist die Verspannungswirkung des Verspannungsgeräts während der Fahrt sichergestellt, obwohl die Federkraft an sich nicht ausreichen würde, um die Kupplungselemente in spielfreiem Eingriff zu halten. Wenn das Verspannungsgerät vor dem Abkuppeln der Kupplung inaktiviert werden soll, so genügt es, ein Entleerungsventil des hydraulischen Feststellgeräts zu öffnen, so daß Druckflüssigkeit aus dem hydraulischen Feststellgerät in den zugehörigen Tank zurückfliesen kann. Zusätzlich kann etwa durch eine pneumatische Steuerleitung wie in der DE-C-25 29 303 dargestellt ein Pneumatikzylinder dazu vorgesehen sein, um das Verspannungsgerät entegegen der Wirkung der Federkraft unwirksam zu machen. Die Betätigung des Pneumatikzylinders und die Öffnung des Rückflußventils des hydraulischen Feststellgeräts kann durch eine einzige pneumatische Signalleitung erfolgen.

Die beiliegenden Figuren erläutern die Erfindung anhand eines Ausführungsbeispieles. Es stellen dar:
- Figur 1: einen Längsschnitt durch eine Anhängerkupplung mit Verspannungsgerät;
- Figur 2: eine Draufsicht auf den Kupplungsbereich zwischen dem Zugfahrzeug und dem Nachlauffahrzeug mit zwei am Nachlauffahrzeug verlegten Bremsleitungen, die an das Zugfahrzeug ankoppelbar sind;
- Figur 3: das Prinzip einer pneumatischen Bremsanlage von Zugfahrzeug und Nachlauffahrzeug, wobei von dieser Bremsanlage eine Abzweigung für die Betätigung des Verspannungsgeräts der Kupplung gemäß Figur 1 abgeleitet ist;
- Figur 4: ein Absperrventil an der zugfahrzeugseitigen Ankopplungsstelle der Versorgungsleitung des pneumatischen Bremssystems für das Nachlauffahrzeug und
- Figur 5: eine Abwandlung der Bremsanlage gemäß Figur 3.

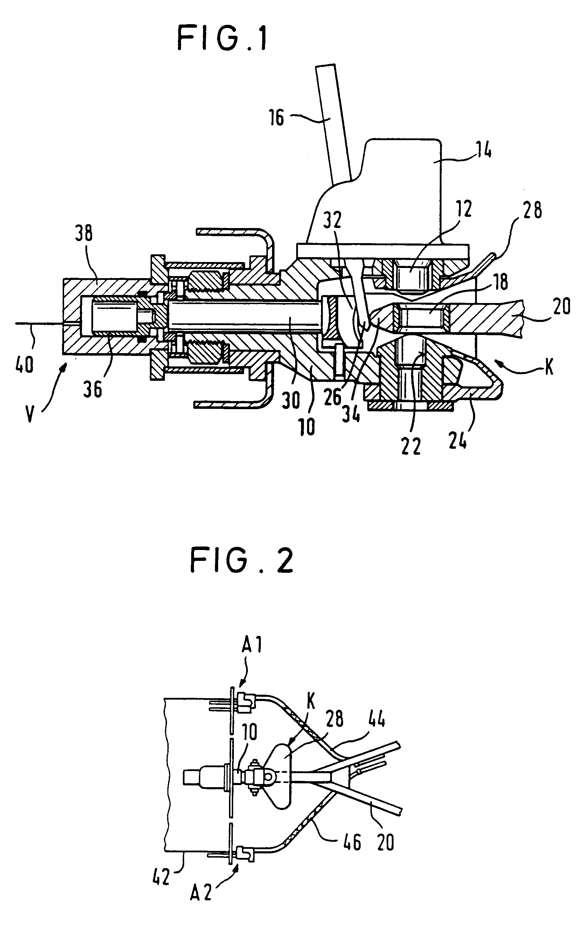

In Figur 1 ist ein Kupplungskörper mit 10 bezeichnet. Dieser Kupplungskörper nimmt einen Kupplungsbolzen 12 auf, der in vertikaler Richtung verschiebbar in dem Kupplungskörper 10 geführt ist. Die Auf- und Absteuerung für den Kupplungsbolzen 12 befindet sich in einem Automatikgehäuse 14, welches auch die mechanischen Sicherungssysteme für den Kupplungsbolzen in seiner abgesenkten Kupplungsstellung (nicht dargestellt) aufnimmt.

Der Kupplungsbolzen 12 kann durch einen sogenannten Aufwerfhebel 16 in die in Figur 1 dargestellte angehobene Entkupplungsstellung gebracht werden.

Der Kupplungsbolzen wirkt mit der Zugöse 18 einer Anhängerdeichsel 20 des Nachlauffahrzeugs zusammen. Zum Einkuppeln muß der Zugbolzen 12 gegenüber der Stellung gemäß Figur 1 abgesenkt werden, so daß er die Zugöse 18 durchtritt und in die Bohrung 22 eines unteren Gabelschenkels 24 des Kupplungskörpers 10 eintritt. Zur Auslösung der Abwärtsbewegung des Kupplungsbolzen 12 in die Kupplungsstellung ist ein Auslösehebel 26 vorgesehen. Wird dieser beim Einfahren der Zugöse 18 in das Kupplungsmaul 28 von der einfahrenden Zugöse 18 beaufschlagt, so löst er Verrastungsmittel innerhalb des Automatikgehäuses 14, so daß der Kupplungsbolzen 12 dann durch die Zugöse 18 hindurch nach unten in Kupplungsstellung gehen kann und in Kupplungsstellung gesichert wird.

In dem Kupplungskörper 10 ist eine Druckstange 30 axial beweglich geführt. Diese Druckstange 30 trägt an ihrem der Zugöse 18 zugekehrten Ende ein Verspannungsprisma 32, welches sich gegen den links liegenden Endbereich der Zugöse 18 bei 34 anlegen kann, um die Zugöse 18 gegen den in Einkupplungsstellung befindlichen Kupplungsbolzen 12 zu verspannen. Die Druckstange 30 trägt an ihrem in Figur 1 linken Ende einen Pneumatikkolben 36, der von einem Pneumatikzylinder 38 aufgenommen ist. Der Pneumatikzylinder 38 ist über eine Leitung 40 an ein Druckluftsystem angeschlossen Nachdem der Kupplungsbolzen 12 in Kupplungsstellung getreten ist und sich durch die Zugöse 18 hindurch erstreckt, wird durch die Druckluftleitung 40 Druckluft in den Zylinder 38 gegeben, so daß die Druckstange nach rechts verschoben und gegen den Bereich 34 der Zugöse 18 angedrückt wird. Damit ist die Zugöse 18 mit dem Kupplungsbolzen 12 spielfrei verspannt. Der Querschnitt des Kolbens 36 muß natürlich so groß gewählt sein, daß mit dem zur Verfügung stehenden Luftdruck eine Anpressung der Zugöse 26 an den Kupplungsbolzen 12 unter allen Betriebsumständen möglich ist, also insbesondere auch dann, wenn sich etwa beim Bremsen des Zugfahrzeugs und beim Nachlaufen des Nachlauffahrzeugs die Zugöse 18 in der Figur 1 nach links gegenüber dem Kupplungsbolzen 12 zu bewegen sucht.

Die Teile 36, 38, 30 und 32 gemäß Figur 1 können insgesamt als ein Verspannungsgerät V bezeichnet werden.

Das Verspannungsgerät V muß wirksam werden und darf erst wirksam werden, nachdem der Kupplungsbolzen 12 durch die Zugöse 18 beim Ankuppeln des Nachlauffahrzeugs an das Zugfahrzeug hindurch getreten ist. Andererseits muß das Verspannungsgerät V unwirksam werden, kurz bevor der Kupplungsbolzen 12 durch Verschwenken des Aufwerfhebels 16 nach oben gezogen wird, damit die Aufwärtsbewegung des Kupplungsbolzens 12 nicht durch Reibung gegenüber der Zugöse gehemmt wird.

Die nachfolgenden Ausführungen befassen sich mit der Betätigung des Verspannungsgeräts V in der vorstehend dargelegten zeitlichen Beziehung zu den Bewegungsvorgängen des Kupplungsbolzens 12.

In Figur 2 erkennt man den Kupplungskörper 10 wieder, der am rückwärtigen Aufbau eines Zugfahrzeugs 42 angebracht ist. An der Anhängerdeichsel 20 sind zwei Bremsleitungen 44 und 46 ständig vorhanden. Wenn die Anhängerdeichsel 20 mittels der insgesamt mit K bezeichneten Anhängerkupplung an das Zugfahrzeug angekuppelt wird, so sind die Bremsleitungen 44 und 46 vermittels Ankopplungseinrichtungen A1 und A2 an das pneumatische Bremssystem des Zugfahrzeugs 42 anzukoppeln, damit ein in dem Nachlauffahrzeug (nicht dargestellt) vorhandenes Bremssystem in Abhängigkeit von der Bremsung in dem zugfahrzeugseitigem Bremssystem ebenfalls Bremswirkung entfaltet.

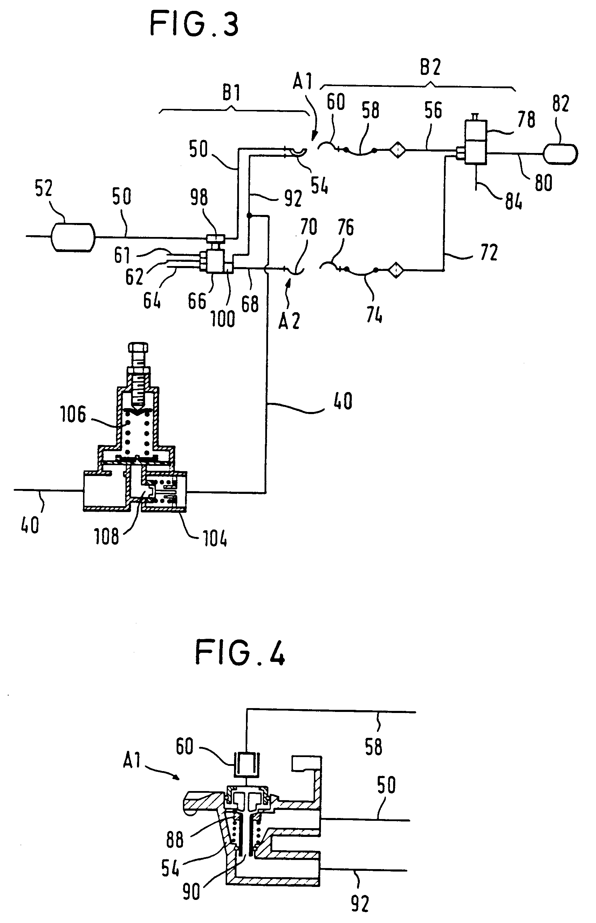

In Figur 3 ist mit B1 das zugfahrzeugseitige Bremssystem bezeichnet und mit B2 das nachlauffahrzeugseitige Bremssystem. Ein Hilfskreis 50 des Bremssystems B1 ist mit einem Druckluftvorrat 52 verbunden, der an einen nicht dargestellten Kompressor des zugfahrzeugseitigen Bremssystems angeschlossen ist und gefüllt gehalten wird. Der Hilfskreis 50 führt zu den Ankopplungsstelle A1 die eine Steckdose 54 aufweist. Eine Versorgungsleitung 56 des nachlauffahrzeugseitigen Bremssystems B2 weist einen Schlauchleitungsabschnitt 58 auf, der einen Stecker 60 trägt. Dieser Stecker 60 kann in die Steckdose 54 eingesteckt werden.

Die Bremskreise 61, 62 und 64 des zugfahrzeugseitigen Bremssystems B1 sind an ein Anhängersteuerventil 66 angeschlossen, von dem ein zugfahrzeugseitiger Steuerleitungsabschnitt 68 zu einer Steckdose 70 der Ankopplungsstelle A2 führt. Ein nachlauffahrzeugseitiger Steuerleitungsabschnitt 72 des nachlauffahrzeugseitigem Bremssystems B2 weist einen Schlauchabschnitt 74 mit einem Stecker 76 auf, der in die Steckdose 70 eingesteckt wird.

Der Versorgungsleitungsabschnitt 56 führt zu einem Anhängerbremsventil 78, zu dem auch der Steuerleitungsabschnitt 72 führt. Von dem Anhängerbremsventil 78 führt eine Leitung 80 zu einem nachlauffahrzeugseitigem Druckluftkessel 82 und eine Leitung 84 bildet den nachlauffahrzeugseitigen Bremskreis.

Wenn die Kupplung K geschlossen ist, so werden die Stecker 60 und 76 in die Steckdoesen 54 und 70 eingesteckt. Das Zusammenstecken des Steckers 60 und der Steckdose 54 ist in Figur 4 näher dargestellt. Der Hilfskreis 50 ist, so lange der Stecker 60 nicht in die Steckdose 54 eingesteckt ist, durch ein Vorratsleitungsabsperrventil 88 abgeschlossen. Wenn der Stecker 60 in die Steckdose 54 eingesteckt wird, so wird das Vorratsleitungsabsperrventil 88 geöffnet, so daß der Hilfskreis 50 mit der Vorratsleitung 58 verbunden wird. Gleichzeitig mit der Herstellung der Verbindung zwischen dem Hilfskreis 50 und der Vorratsleitung 58 wird über einen Hohlventilschaft 90 eine Quersteuerleitung 92 an den Druck des Hilfskreises 50 angeschlossen; die Quersteuerleitung 92 führt wie aus Figur 3 ersichtlich zu dem Anhängersteuerventil 66. Das Anhängersteuerventil 66 ist seinerseits an den Hilfskreis 50 über das T-Stück 98 angeschlossen. In das Anhängersteuerventil 66 ist ein Steuerleitungsabsperrventil 100 integriert, welche durch die Quersteuerleitung 92 dann und nur dann geöffnet wird, wenn die Quersteuerleitung 92 an der Ankoppelungsstelle A1 Druck erhält, d.h. wenn der Stecker 60 in die Steckdose 54 gesteckt wird und danach Druckluft aus dem Hilfskreis 50 über das Vorratsleitungsabsperrventil 88 und den Hohlventilschaft 90 in die Steuerleitung 92 gelangen kann. Über das Anhängersteuerventil 66 gelangt bei geöffnetem Steuerleitungsabsperrventil 100 ein Steuerdruck in die Steuerleitung 68, 74, 72 und letztlich zu den Anhängerbremsventil 78. Dieser Steuerdruck wird von dem Druck in den Hilfskreis 50 abgeleitet und in seiner Größe entsprechend den Drücken in den Bremskreisen 61, 62 und 64 des Zugfahrzeugs durch das Anhängersteuerventil eingestellt. Der Druck in der Steuerleitung 72 steuert das Anhängerbremsventil 78 an, so daß dieses je nach der Größe des Drucks in der Steuerleitung 72 Druckluft aus dem Hilfskreis 50 über die Vorratsleitung 58 und 56 in den nachlauffahrzeugseitigen Bremskreis 84 gelangen läßt, wobei der Druck in dem Bremskreis 84 von dem Druck in den Bremskreisen 61, 62, 64 abhängig ist. Der Druckluftbehälter 82 sorgt dafür, daß für den Bremskreis 84 selbst dann noch Druckluft zur Verfügung steht, wenn die Vorratsleitung 58, 56 leck sein sollte.

Das Vorratsleitungsabsperrventil 88 sorgt dafür, daß bei Trennung von Stecker 60 und Steckdose 54 keine Druckluft aus dem Hilfskreis 50 entweichen kann. Das Steuerleitungsabsperrventil 100 sorgt - gesteuert über die Quersteuerleitung 92 - dafür, daß bei Trennung von Steckdose 70 und 76 keine aus dem Hilfskreis 50 stammende Druckluft durch die Steuerleitung 68 entweichen kann, wenn in einem der Bremskreise 61, 62, 64 zum Zwecke der Bremsung des Zugfahrzeugs ein Bremsdruck aufgebaut wird. Voraussetzung für die Absperrung des Steuerleitungsabsperrventils 100 ist, daß der Stecker 60 von der Steckdose 54 ebenfalls getrennt ist.

Für das Verständnis der Betätigung des Verspannugnsgeräts V ist aus dem vorstehenden folgendes festzuhalten:

Die Stecker 60 und 76 werden erst nach dem Einkuppeln der Kupplung K in die Steckdosen 54 bzw. 70 eingesteckt. Dann erst tritt in der Quersteuerleitung 92 der in dem Hilfskreis 50 herrschende Druck auf.

Andererseits wird beim Abkuppeln des Nachlauffahrzeugs von dem Zugfahrzeug die Trennung der Stecker 60 und 76 von den Steckdosen 54 und 70 vollzogen, bevor die Kupplung K gelöst wird. Der Druck in der Quersteuerleitung 92 bricht also zusammen, bevor die Kopplung K gelöst wird. Aus dieser durch Betriebsvorschriften festgehaltenen und auch zur Vermeidung des Abreißens der Schlauchleitungsabschnitte 58 und 74 von dem Bedienungspersonal stets eingehaltenen Reihenfolge: Zunächst Einkuppeln der Kupplung K und dann Einstecken der Stecker 60, 76 in die Steckdosen 54, 70 bzw. erst Herausziehen der Stecker 60, 76 aus den Steckdosen 54, 70 und dann erst Lösen der Kupplung K ergibt sich die Möglichkeit, den Druck in der Quersteuerleitung 92 zur Betätigung des Verspannungsgeräts V zu verwenden. Es ist deshalb von der Quersteuerleitung 92 die Leitung 40 abgezapft, die über ein Überströmungsventil 104 zu dem Druckluftzylinder 38 des Verspannungsgeräts V in Figur 1 führt.

Das Überströmungsventil 104 sei zunächst in seiner Wirkung vernachläßigt. Wenn die Kupplung K eingekuppelt wird, sind die Stecker 60 und 76 wie vorstehend dargelegt noch nicht in die Steckdosen 54 bzw. 70 eingesteckt. Die Quersteuerleitung 92 ist deshalb drucklos. Es gelangt kein Luftdruck in den Zylinder 38. Der Kolben 36 übt deshalb keine spielausschaltende Verspannungskraft auf die Druckstange 30 und das Prisma 32 aus. Der Kupplungsbolzen 12 kann durch die Zugöse 18 hindurch nach unten in Kupplungsstellung verfahren werden.

Nach dem Einkuppeln der Kupplung K werden die Stecker 60 und 76 in die Steckdosen 54 und 70 gesteckt. In der Quersteuerleitung 92 baut sich Druck auf. Dieser Druck gelangt über die Leitung 40 in den Zylinder 38. Der Kolben 36 wird in Figur 1 nach rechts bewegt. Die Zugöse 26 wird mit dem Kupplungsbolzen 12 in spielfreie Anlage verspannt.

Wenn abgekuppelt werden soll, so werden zunächst die Stecker 60 und 76 aus den Steckdosen 54 und 70 gezogen. Damit bricht der Druck in der Quersteuerleitung 92 zusammen. Der Kolben 36 in dem Zylinder 38 wird durcklos. Die Verspannung zwischen dem Kupplungsbolzen 12 und der Zugöse 18 hört auf. Der Kupplungsbolzen 12 kann ohne Behinderung durch das Verspannungsgerät V in seine in Figur 1 gezeigte ausgekuppelte Stellung angehoben werden.

Das Übeströmventil 104 verhindert, daß bei einem etwaigen Leck in der Leitung 40 links von dem Überstörmventil 104 der Druck in der Quersteuerleitung 92 zusammenbricht. Dieser Druck kann nur bis zu einem bestimmten an dem Überströmventil 104 eingestellten Wert absinken. Wird dieser Wert unterschritten, so schließt das Überströmventil 104 unter der Wirkung der Schließfeder 106.

In das Überströmventil 104 ist ein Rückströmventil 108 integriert. Dieses Rückströmventil 108 öffnet in Figur 3 von links nach rechts wenn der Druck in der Quersteuerleitung 92 abgebaut wird, so daß im Falle eines Druckabfalls in der Quersteuerleitung 92 auch der Druck in dem Zylinder 38 abgebaut wird, was wie oben beschrieben notwendig ist.

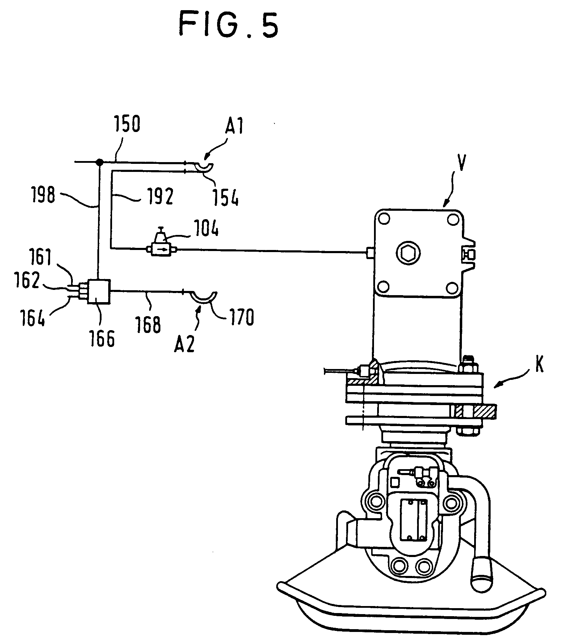

In Fig. 5 ist eine Abwandlung der Bremsanlage gemäß Fig. 3 dargestellt. Analoge Teile sind mit gleichen Bezugszeichen bezeichnet wie in Fig. 3, jeweils vermehrt um die Zahl 100.

Bei dieser Ausführungsform ist die Quersteuerleitung 92 der Ausführungsform nach Fig. 3 nicht vorhanden und demgemäß fehlt auch das Steuerleitungsabsperrventil 100. Statt dessen ist die Ankopplungsstelle A2 so ausgebildet, daß beim Abkoppeln in A2 die Leitung 168 automatisch abgesperrt wird. Bei dieser Ausführungsform steht also die Quersteuerleitung 92 zur Steuerung des Verspannungsgerätes V nicht zur Verfügung. Die Ankopplungsstelle A1 ist jedoch genauso geblieben wie in Fig. 4 dargestellt. Wenn an der Ankopplungsstelle A1 angekoppelt wird, so erhält die Leitung 192 Druckluft und gibt diese über das Überströmventil 104 an das Verspannungsgerät V weiter, wobei in der Leitung 192 auch hier ein Überströmventil 104 mit Rückströmung angeordnet ist. Wenn also in der Ankopplungsstelle A1 angekoppelt wird, so tritt in der Leitung 192 Druck auf, welcher auf das Verspannungsgerät V einwirkt. Auch bei dieser Ausführungsform könnte die Leitung 192 in unmittelbarer Nähe der Ankopplungsstelle A1 mit einem Sensor verbunden sein, der das Verpsannungsgerät V steuert. Der Rest der Leitung 192 könnte dann entfallen.

## Patentansprüche

1. Einrichtung zur Spielausschaltung an Anhängerkupplungen (K) zwischen einem Zugfahrzeug (42) und einem Nachlauffahrzeug mit einem zwei gekuppelte Kupplungselemente (12, 18) gegeneinander verspannenden Verspannungsgerät (V), welches beim Vorgang des Ankuppelns und beim Vorgang des Abkuppelns unwirksam ist,
**dadurch gekennzeichnet,**
daß das Verspannungsgerät (V) in Abhängigkeit von der Ankoppelung mindestens einer Zusatzverbindung (54, 60, 58; 70, 76, 74) zwischen dem Zugfahrzeug (42) und dem Nachlauffahrzeug aktivierbar und in Abhängigkeit von der Abkopplung der Zusatzverbindung (54, 60, 58; 70, 76 74) inaktivierbar ist.

2. Einrichtung nach Anspruch 1,
**dadurch gekennzeichnet,**
daß die Zusatzverbindung (54, 60, 58; 70, 76, 74) eine Anhängerversorgungsleitung ist oder einer solchen angehört.

3. Einrichtung nach Anspruch 1 oder 2,
**gekennzeichnet**
durch einen in eine Kopplungseinrichtung (A1, A2) der Zusatzverbindungsleitung (54, 60, 58; 70, 76, 74) integrierten durch das An- und Abkoppeln aktivierbaren bzw. inaktivierbaren Aktivierungssensor.

4. Einrichtung nach Anspruch 1 oder 2,
**dadurch gekennzeichnet,**
daß ein Aktivierungs- bzw. Inaktivierungssignal von einer Zustandsveränderung in einem mit der jeweiligen Zusatzverbindung (54, 60, 58; 70, 76, 74) zusammenhängenden System (B1) ableitbar ist, welche Zustandsveränderung als Folge des Ankoppelns bzw. Abkoppelns der jeweiligen Zusatzverbindung (54, 60, 58; 70,76, 74) eintritt.

5. Einrichtung nach Anspruch 4,
**dadurch gekennzeichnet,**
das Aktivierungs- bzw. Inaktivierungssignal von einer Zustandsveränderung in einem Bremssystem (B1, B2) ableitbar ist, welches infolge Ankoppelns bzw. Abkoppelns mindestens einer Bremsleitung (58, 56; 74, 72) zum Nachlauffahrzeug auftritt.

6. Einrichtung nach Anspruch 5,
**dadurch gekennzeichnet,**
daß im Falle einer pneumatischen Zwei-Leitungs-Bremsanlage mit einer Vorratsleitung (58, 56) und einer Steuerleitung (74, 72) zum Nachlauffahrzeug, mit einem auf die Ankopplung bzw. Abkopplung der Vorratsleitung (58, 56) reagierenden Vorratsleitungsabsperrventil (88), mit einem ebenfalls auf die Ankopplung bzw. Abkopplung der Vorratsleitung (58, 56) reagierenden, die Steuerleitung (76, 74) zum Nachlauffahrzeug freigebenden oder sperrenden Steuerleitungabsperrventil (100) und mit einer Quersteuerleitung (92) von dem Vorratsleitungsabsperrventil (88) zu dem Steuerleitungsabsperrventil (100) das Aktivierungs- bzw. Inaktivierungssignal von der Quersteuerleitung (92) ableitbar ist, welche in Abhängigkeit von der Ankoppelung bzw. Abkoppelung der Vorratsleitung (58, 56) Druck führt oder drucklos ist.

7. Einrichtung nach Anspruch 6,
**dadurch gekennzeichnet,**
daß das Aktivierungs- bzw. Inaktivierugnssignal in Form von aus der Quersteuerleitung (92) abgezweigter Druckluft zur Betätigung oder Steuerung des Verspannungsgeräts (V) dient.

8. Einrichtung nach Anspruch 7,
**dadurch gekennzeichnet,**
daß die Druckluft zur Betätigung oder Steuerung des Verspannungsgeräts (V) von der Quersteuerleitung (92) über ein Überströmventil (104) mit Rückströmung (108) abgeleitet ist.

9. Einrichtung nach Anspruch 6,
**dadurch gekennzeichnet,**
daß das Aktivierungs- bzw. Inaktivierungssignal mittels eines Drucksensors von der Quersteuerleitung (92) ableitbar ist und ein Versorgungssystem für das Verspannungsgerät (V) steuert.

10. Einrichtung nach Anspruch 5,
**dadurch gekennzeichnet,**
daß im Falle einer pneumatischen Zwei-Leitungs-Bremsanlage mit einer Vorratsleitung (150) und einer Steuerleitung (168) zum Nachlauffahrzeug mit einem auf die Ankopplung bzw. Abkopplung der Vorratsleitung reagierenden Vorratsleitungsabsperrventil (bei A1) und mit einem auf die Ankopplung bzw. Abkopplung der Steuerleitung (168) reagierenden Steuerleitungsabsperrventil (bei A2) das Aktivierungs- bzw. Inaktivierungssignal von der Vorratsleitung (150) an der Stelle des Vorratsleitungsabsperrventils (bei A1) abgeleitet ist.

## Claims

1. An arrangement for eliminating clearance on trailer couplings (K) between a tractor vehicle (42) and a towed vehicle, with a tensioning device (V) for tensioning two coupled coupling elements (12, 18) in respect of each other and which is ineffective during the process of coupling engagement and disengagement, characterised in that the tensioning device (V) can be activated as a function of the coupling-on of at least one auxiliary connection (54, 60, 58; 70, 76, 74) between the tractor vehicle (42) and the towed vehicle and can be inactivated as a function of the uncoupling of the auxiliary connection (54, 60, 58; 70, 76, 74).

2. An arrangement according to Claim 1, characterised in that the auxiliary connection (54, 60, 58; 70, 76, 74) is or is part of a trailer power supply conductor.

3. An arrangement according to Claim 1 or 2, characterised by an activation sensor which can be activated or inactivated by the coupling or uncoupling procedure and is integrated into a coupling means (A1, A2) of the auxiliary connecting line (54, 60, 58; 70, 76, 74).

4. An arrangement according to Claim 1 or 2, characterised in that an activating or deactivating signal can be derived from a change in status in a system (B1) associated with the relevant auxiliary connection (54, 60, 58; ;70, 76, 74), which change in status occurs as a result of the coupling or uncoupling of the relevant auxiliary connection (54, 60, 58; ;70, 76, 74).

5. An arrangement according to Claim 4, characterised in that the activating or inactivating signal can be derived from a change in status in a braking system (B1, B2) which occurs as the result of the coupling or uncoupling of at least one brake line (58, 56; 74, 72) to the towed vehicle.

6. An arrangement according to Claim 5, characterised in that in the case of a pneumatic dual-line braking system with a supply line (58, 56) and a control line (74, 72) to the towed vehicle with a supply line shut-off valve (88) reacting to the coupling or uncoupling of the supply line (58, 56), with a control line shut-off valve (100) reacting likewise to the coupling or uncoupling of the supply line (58, 56) and an opening up or blocking the control line (76, 74) to the towed vehicle and with a transverse control line (92) from the supply line shut-off valve (88) to the control line shut-off valve (100), the activating or inactivating signal being capable of being derived from the transverse control line (92) which either conveys pressure or is pressureless according to the coupling or uncoupling of the supply line (58, 56).

7. An arrangement according to Claim 6, characterised in that the activating or inactivating signal in the form of compressed air drawn from the transverse control line (92) serves to actuate or control the tensioning device (V).

8. An arrangement according to Claim 7, characterised in that the compressed air for actuating or controlling the tensioning device (V) is derived from the transverse control line (92) via a transfer valve (104) with a reverse flow facility (108).

9. An arrangement according to Claim 6, characterised in that the activating or inactivating signal can be derived by a pressure sensor from the transverse control line (92) and controls a supply system for the tensioning device (V).

10. An arrangement according to Claim 5, characterised in that in the case of a pneumatic dual-line braking system with a supply line (150) and a control line (168) to the towed vehicle with, (at A1) a supply line shut-off valve reacting to the coupling or uncoupling of the supply line and with (at A2) a control line shut-off valve reacting to the coupling or uncoupling of the control line (168), the activating or inactivating signal is derived from the supply line (150) at the location of the supply line shut-off valve (at A1).

## Revendications

1. Dispositif de rattrapage de jeu pour attelage de remorque (K) entre un véhicule tracteur (42) et un véhicule tracté, avec un appareil de retenue (V) retenant l'un contre l'autre deux éléments d'accouplement couplés (12, 18), lequel est inactif lors de l'opération de couplage et lors de l'opération de découplage,
caractérisé en ce que l'appareil de retenue (V) peut être activé en fonction du couplage d'au moins une liaison supplémentaire (54, 60, 58 ; 70, 76, 74) entre le véhicule tracteur (42) et le véhicule tracté, et peut être inactivé en fonction du découplage de la liaison supplémentaire (54, 60, 58 ; 70, 76, 74).

2. Dispositif selon la revendication 1,
caractérisé en ce que la liaison supplémentaire (54, 60, 58 ; 70, 76, 74) est une ligne d'alimentation de remorque ou fait partie d'une ligne de ce type.

3. Dispositif selon la revendication 2,
caractérisé en ce qu'il comprend un capteur d'activation, intégré dans un dispositif de couplage (A1, A2) de la ligne de liaison supplémentaire (54, 60, 58 ; 70, 76, 74), pouvant être activé et inactivé respectivement par le couplage et le découplage.

4. Dispositif selon l'une quelconque des revendications 1 ou 2, caractérisé en ce qu'un signal d'activation ou d'inactivation peut être dérivé d'une modification d'état, dans un système (B1) associé à la liaison supplémentaire (54, 60, 58 ; 70, 76, 74) considérée, laquelle modification d'état s'opère en tant que conséquence du couplage ou découplage de la liaison supplémentaire (54, 60, 58 ; 70, 76, 74) considérée.

5. Dispositif selon la revendication 4,
caractérisé en ce que le signal d'activation ou d'inactivation peut être dérivé d'une modification d'état dans un système de freinage (B1, B2), ledit signal étant généré à la suite du couplage ou découplage d'au moins une ligne de freinage (58, 56 ; 74, 72) vers le véhicule tracté.

6. Dispositif selon la revendication 5,
caractérisé en ce que, dans le cas d'une installation de freinage pneumatique à deux lignes, avec une ligne de réserve (58, 56) et une ligne de commande (74, 72) vers le véhicule tracté, avec une vanne d'arrêt de ligne de réserve (88) réagissant respectivement au couplage ou découplage de la ligne de réserve (58, 56), avec une vanne d'arrêt de ligne de commande (100), réagissant également au couplage ou découplage de la ligne de réserve (58, 56), libérant ou bloquant la ligne de commande (76, 74) vers le véhicule tracté, et avec une ligne de commande transversale (92) de la vanne d'arrêt de la ligne de réserve (88) vers la vanne d'arrêt de la ligne de commande (100), le signal d'activation ou d'inactivation peut être dérivé de la ligne de commande transversale (92), laquelle exerce une pression ou est sans pression, en fonction respectivement du couplage ou du découplage de la ligne de réserve (58, 56).

7. Dispositif selon la revendication 6,
caractérisé en ce que le signal d'activation ou d'inactivation sert, sous la forme d'air comprimé dérivé de la ligne de commande transversale (92), à actionner ou commander l'appareil de retenue (V).

8. Dispositif selon la revendication 7,
caractérisé en ce que l'air comprimé, pour l'actionnement ou la commande de l'appareil de retenue (V), est dérivé de la ligne de commande transversale (92), par une soupape de décharge (104) avec écoulement de retour (108).

9. Dispositif selon la revendication 6,
caractérisé en ce que le signal d'activation ou d'inactivation peut être dérivé de la ligne de commande transversale (92) au moyen d'un capteur de pression et commande un système d'alimentation pour l'appareil de retenue (V).

10. Dispositif selon la revendication 5,
caractérisé en ce que, dans le cas d'une installation de freinage pneumatique à deux lignes avec une ligne de réserve (150) et une ligne de commande (168) vers le véhicule tracté, avec une vanne d'arrêt de ligne de réserve (en A1) réagissant respectivement au couplage ou découplage de la ligne de réserve, avec une vanne d'arrêt de ligne de commande (en A2) réagissant respectivement au couplage ou découplage de la ligne de commande (168), le signal d'activation ou d'inactivation est dérivé de la ligne de réserve (150), au lieu de la vanne d'arrêt de la ligne de réserve (en A1).
